# EUROPÄISCHE PATENTANMELDUNG

(11) **EP 0 927 976 A2**
(43) Veröffentlichungstag der Anmeldung: **07.07.1999**
(21) Anmeldenummer: 98124396.7
(22) Anmeldetag: 22.12.1998
(51) Int. Cl.: G07F 11/00

(54) **Getränkeautomat**

(30) Priorität: 05.01.1998 DE 29800069 U
(71) Anmelder: Runneck, Matthias, 67346 Speyer (DE); Zettler, Gerhard, 67346 Speyer (DE)
(72) Erfinder: Runneck, Matthias, 67346 Speyer (DE); Zettler, Gerhard, 67346 Speyer (DE)
(74) Vertreter: Trappenberg, Hans

(57) **Zusammenfassung**

Ein Getränkeautomat zur Bereitstellung und Ausgabe von in Behältern verpackten Getränken 1, weist einen Speicherraum 2 und ein Entnahmefach 11, 12 auf. Die Getränke sind in Getränkekästen 1 enthalten, welche nebeneinander oder hintereinander auf waagrecht verlaufenden Transportelementen 4 angeordnet sind. Des weiteren sind mindestens zwei Transportelemente 4 übereinander angeordnet. Erste Mittel 5 sind zur Durchführung einer waagrechten Bewegung der Getränkekästen 1 vorgesehen. Zweite Mittel 6 sind zur Durchführung einer senkrechten Bewegung der Transportelemente 4 vorgesehen.

## Beschreibung

Die Erfindung betrifft einen Getränkeautomaten zur Bereitstellung und Ausgabe von in Behältern verpackten Getränken nach dem Oberbegriff des Anspruchs 1, mit einem Speicherraum und einem Entnahmefach.

Derartige Getränkeautomaten sind im Stand der Technik hinreichend bekannt und werden regelmäßig zur Ausgabe von in Flaschen oder Dosen abgefüllten Getränken verwendet. Die Automaten haben den großen Vorteil, daß sie ohne den Einsatz von Verkaufspersonal unabhängig von Geschäftszeiten benutzt werden können. Hierdurch ist man in der Lage, jederzeit Getränke erwerben zu können.

Um einen größeren Bedarf an Getränken zu decken, sind die Automaten jedoch nicht geeignet. Denn, da jede Dose oder Flasche dem Automaten einzeln entnommen werden muß, ist die Ausgabeprozedur für eine größere Anzahl von Getränken recht umständlich. Darüber hinaus würde man eine Vielzahl einzelner Flaschen oder Dosen erhalten, welche sich schlecht transportieren ließen beziehungsweise in eigens dafür mitgebrachten Transportbehältern transportiert werden müßten.

Will man eine größere Menge an Getränken erwerben, läßt man sich diese ins Haus liefern oder fährt zu sogenannten Getränkemärkten. Hierbei ist man jedoch auf die üblichen Geschäftszeiten angewiesen. Es ist somit nicht möglich, außerhalb der üblichen Geschäftszeiten auf einfache Weise eine größere Menge an Getränken zu erwerben. Darüber hinaus erfordert die bekannte Vorgehensweise den Einsatz von Verkaufspersonal.

Es ist Aufgabe der Erfindung einen eingangs genannten Getränkeautomaten so auszubilden, daß von ihm auf einfache Weise größere Mengen an Getränken ausgegeben werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung sind die Getränke in Getränkekästen enthalten, wobei die Getränkekästen nebeneinander beziehungsweise hintereinander auf waagerecht verlaufenden Transportelementen angeordnet sind und mindestens zwei Transportelemente übereinander angeordnet sind. Des weiteren sind erste Mittel zur Durchführung einer waagerechten Bewegung der Getränkekästen sowie zweite Mittel zur Durchführung einer senkrechten Bewegung der Transportelemente vorhanden.

Dadurch, daß die Getränke in Getränkekästen enthalten sind und somit die Getränke kastenweise dem Automaten entnommen werden können, läßt sich dem Automaten auf einfache Weise eine große Menge an Getränken entnehmen. Durch die Anordnung der Getränkekästen hintereinander beziehungsweise nebeneinander auf den Transportelementen und die Anordnung von mehreren Transportelementen übereinander, wird in vorteilhafter Weise ein sehr kompakter Speicherraum zur Verfügung gestellt. Die Getränkekästen sind in dem Speicherraum etwa so angeordnet, als wären sie zu größeren Stapeln zusammengefaßt.

Dadurch, daß die Getränkekästen hintereinander auf waagerecht verlaufenden Transportelementen angeordnet sind und erste Mittel zur Durchführung einer waagerechten Bewegung der Getränkekästen vorhanden sind, lassen sich die Getränkekästen auf einfache Weise aus dem Getränkeautomaten ausgeben. Hierzu muß lediglich dafür gesorgt werden, daß ein Transportelement in Höhe des Entnahmefachs angeordnet ist, wodurch dann durch die ersten Mittel Getränkekästen in das Entnahmefach geschoben werden können.

Wurden im Getränkeautomaten alle sich auf einem Transportelement befindlichen Getränkekästen entnommen, werden die Transportelemente mittels der zweiten Mittel solange senkrecht verschoben, bis sich ein anderes Transportelement in Höhe des Entnahmefachs befindet, auf welchem sich Getränkekästen befinden. Diese können dann wiederum mittels der ersten Mittel in das Entnahmefach befördert werden.

Bei einer besonderen Ausführungsform der Erfindung ist vorgesehen, daß die Transportelemente Transportbänder sind, welche eine mit einem Antriebsrad versehene Antriebswelle aufweisen. Mittels der Transportbänder lassen sich die auf ihnen befindlichen Getränkekästen auf sehr einfache Weise in das Entnahmefach befördern. Darüber hinaus haben Transportbänder den Vorteil, daß sie mit einem einfachen Antrieb, wie beispielsweise einem Elektromotor versehen werden können.

Es ist jedoch auch möglich, die Transportelemente durch hintereinander angeordnete Walzen oder Gleitrollen auszubilden. Zum Transport müßten dann die Walzen oder Gleitrollen angetrieben werden oder die Kasten mittels eines Zylinders über die Walzen oder Gleitrollen geschoben werden. Werden die Getränkekästen mittels eines Zylinders bewegt, können die Transportelemente auch aus einer ebenen, glatten Fläche bestehen.

Bei einer weiteren besonderen Ausführungsform der Erfindung sind die Transportelemente in senkrecht angeordneten Gleitschienen geführt und mittels variabler Elemente miteinander verbunden. Hierbei ist es besonders vorteilhaft, wenn die zweiten Mittel mit dem obersten Transportelement verbunden sind.

Durch die Verbindung der Transportelemente mittels variabler Elemente miteinander lassen sich die Transportelemente auf einfache Weise nach und nach in Höhe des Entnahmefachs positionieren. Hierzu braucht lediglich das oberste Transportelement etwas abgesenkt werden, wodurch alle sich unter dem obersten Transportelement befindlichen Transportelemente abgesenkt werden.

Werden die Transportelemente soweit abgesenkt, daß das unterste Transportelement auf dem Boden aufsitzt, ist es mittels der variablen Elemente, welche in besonders vorteilhafter Weise gliederartige Elemente wie beispielsweise Ketten sind, möglich, daß sich die nachfolgenden Transportelemente ohne Zwischenraum auf die unteren Transportelemente aufsetzen. Hierdurch wird nur ein relativ geringer Raum zum Stapeln der leeren Transportelemente benötigt.

In besonders vorteilhafter Weise werden so viel Transportelemente übereinander angeordnet, daß sie im aufeinandergestapelten Zustand bis zur Unterkante des Entnahmefachs reichen.

Bei einer weiteren besonderen Ausführungsform der Erfindung ist vorgesehen, daß die ersten Mittel jeweils mit dem Antriebsrad des sich in Höhe des Ausgabefachs befindlichen Transportbandes verbunden sind. Dadurch, daß die Transportbänder lediglich ein Antriebsrad aufweisen und sich die ersten Mittel in Höhe des Ausgabefachs befinden, ist es nicht erforderlich, für jedes Transportelement separate Mittel zur Durchführung der waagerechten Bewegung der Getränkekästen vorzusehen. Lediglich während der Dauer, während sich ein Transportband in Höhe des Ausgabefachs befindet, ist das betreffende Antriebsrad mit den ersten Mitteln verbunden. Die Verbindung kann eine herkömmliche Kopplung sein.

Bei einer weiteren besonderen Ausführungsform der Erfindung ist vorgesehen, daß die Transportelemente Führungsschienen aufweisen, mittels welcher die Getränkekästen seitlich führbar sind. Durch die Führungsschienen wird in vorteilhafter Weise erreicht, daß auch unterschiedlich breite Getränkekästen auf den Transportelementen bewegt werden können. Die Führungsschienen brauchen dann lediglich der Breite der Kästen angepaßt werden. Hierdurch läßt sich der erfindungsgemäße Getränkeautomat auf einfache Weise für unterschiedliche Getränkekästen und damit auch für unterschiedliche Getränke einrichten.

Als besonders vorteilhaft hat sich eine Ausführungsform herausgestellt, bei der das Ausgabefach als Schleuse ausgebildet ist. Hierdurch wird zum einen eine sichere Ausgabe der Getränkekästen ermöglicht, und zum anderen verhindert, daß dem Getränkeautomaten auf unzulässige Weise durch das Entnahmefach Getränkekästen entnommen werden.

Weitere Merkmale der vorliegenden Erfindung ergeben sich aus der nachfolgenden Beschreibung eines besonderen Ausführungsbeispiels unter Bezugnahme auf die Zeichnung.

Es zeigt:
- Figur 1: eine Seitenansicht eines erfindungsgemäßen Getränkeautomaten in schematischer Darstellung in einer ersten Betriebsstellung
- Figur 2: den in Figur 1 dargestellten Getränkeautomaten in einer zweiten ßetriebsstellung,
- Figur 3: den in Figur 1 dargestellten Getränkeautomaten in einer dritten Betriebsstellung,
- Figur 4: eine Anordnung von nebeneinander angeordneten erfindungsgemäßen Getränkeautomaten von hinten,
- Figur 5: einen vollständig gefüllten erfindungsgemäßen Getränkeautomaten,
- Figur 6: einen etwa zu 90 % geleerten Getränkeautomaten und
- Figur 7: eine weitere Ausführungsform des erfindungsgemäßen Getränkeautomaten für die Entnahme unterschiedlicher Getränke.

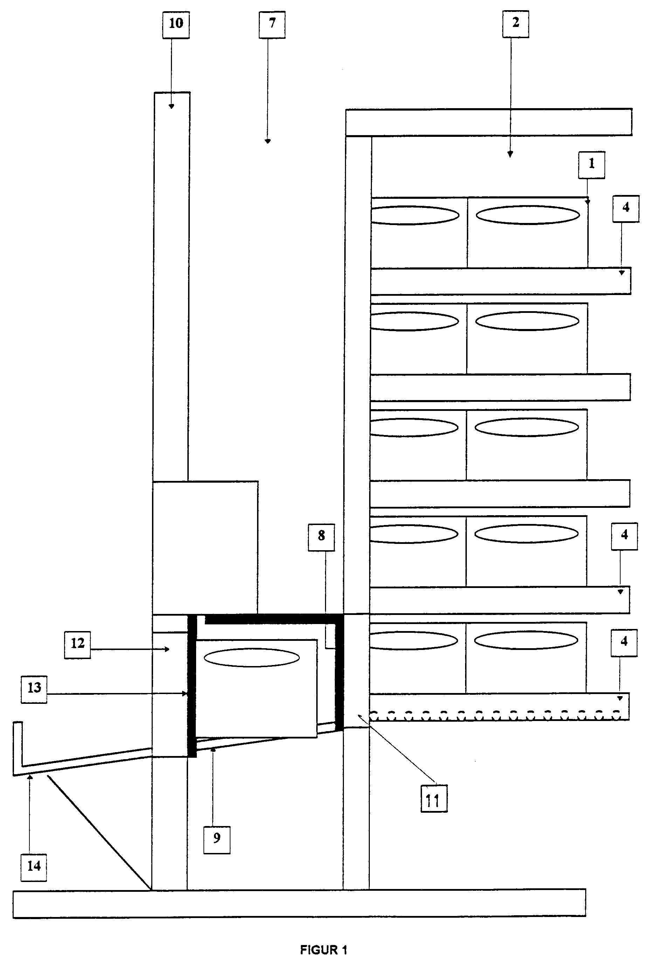

Wie insbesondere den Figuren 1 bis 3 entnommen werden kann, sind in einem erfindungsgemäßen Getränkeautomaten Getränkekästen 1 hintereinander auf Transportelementen 4 angeordnet. Die Transportelemente 4 mit den Getränkekästen 1 befinden sich in einem geschlossenen Speicherraum 2.

Die Transportelelmente 4 sind als Transportbänder ausgebildet und übereinander angeordnet. Wenngleich in den Figuren 1 bis 3 auch nur fünf übereinander angeordnete Transportelemente 4, auf denen sich jeweils zwei hintereinander angeordnete Getränkekästen 1 befinden, dargestellt sind, so werden zweckmäßigerweise zehn Transportbänder übereinander angeordnet, auf welchen insgesamt zehn Getränkekästen hintereinander angeordnet sind.

Der Speicherraum 2 weist in Höhe des unteren Transportbandes 4 eine erste Öffnung 11 auf, durch welche die Getränkekästen 1 in einen Zwischenraum 7 gelangen können. Die erste Öffnung 11 ist mittels eines ersten Schiebers 8 verschließbar.

Im Zwischenraum 7 ist unterhalb der ersten Öffnung 11 ein Ausfuhrband 9 angeordnet. Das Ausfuhrband 9 reicht von der ersten Öffnung 11 bis zu einer in einer Außenwand 10 des Getränkeautomaten angeordneten zweiten Öffnung 12. Die zweite Öffnung 12 ist mittels eines zweiten Schiebers 13 verschließbar.

Außerhalb des Zwischenraums 7 ist unterhalb der zweiten Öffnung 12 ein Entnahmeelement 14 angeordnet. Das Entnahmeelement 14 weist an seiner der Außenwand 10 abgewandten Seite einen Anschlag auf. Des weiteren weist das Entnahmeelement 14 zweckmäßigerweise Gleitrollen auf, auf welchen die dem Getränkeautomaten entnommenen Getränkekästen 1 bis zum Anschlag gleiten.

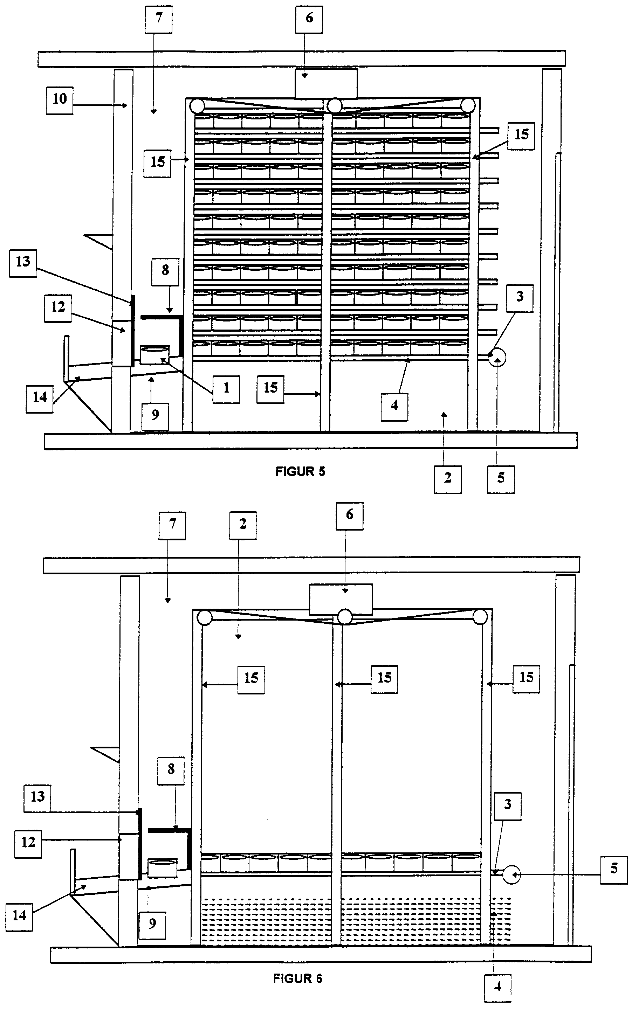

Wie insbesondere der Figur 5 entnommen werden kann, ist ein erster Antrieb 5 vorgesehen, welcher in Höhe der ersten Öffnung 11 angeordnet ist. Die Transportelemente 4 weisen jeweils eine Antriebswelle 3 auf, welche jeweils mit dem ersten Antrieb 5 in Eingriff gebracht werden können. Es ist jeweils die Antriebswelle 3 des Transportbandes 4 mit dem ersten Antrieb 5 in Eingriff gebracht, welche sich in Höhe der ersten Öffnung 11 befindet.

Die Transportbänder 4 sind in senkrecht angeordneten Gleitschienen 15 geführt und mittels Ketten miteinander verbunden. Das oberste Transportband 4 ist mit einem zweiten Antrieb 6 verbunden, mittels welchem die Transportbänder 4 abgesenkt werden können.

Im befüllten Zustand befindet sich das oberste Transportband 4 im geringen Abstand unterhalb des zweiten Antriebs 6. In dieser Stellung befindet sich das unterste Transportband 4 in Höhe der ersten Öffnung 11. In diesem Zustand ist die Antriebswelle 3 des untersten Transportbands 4 mit dem ersten Antrieb 5 in Eingriff gebracht.

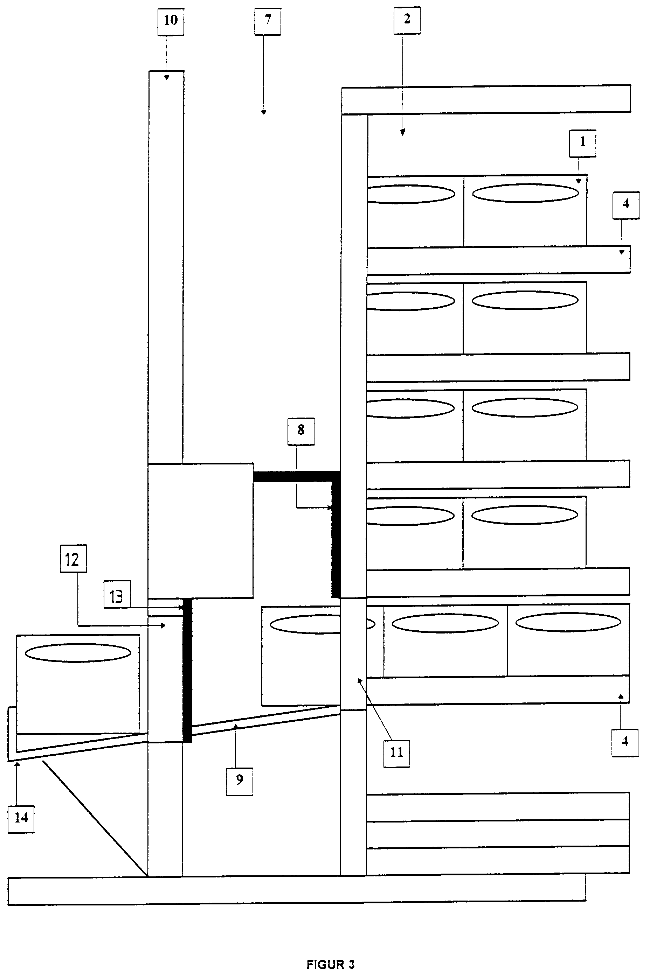

Zur Entnahme eines Getränkekastens 1 aus dem erfindungsgemäßen Getränkeautomaten wird zunächst die erste Öffnung 11 mittels des ersten Schiebers 8 geöffnet, wie dies der Darstellung in Figur 3 entspricht. Danach wird mittels des ersten Antriebs 5 das unterste Transportband 4 soweit vorwärts bewegt, bis sich der vorderste Getränkekasten 1 im Zwischenraum 7 befindet.

Nachdem der vorderste Getränkekasten 1 auf dem untersten Transportband 4 soweit vorwärts bewegt wurde, daß er sich auf dem Ausfuhrband 9 befindet, wird er mittels des Ausfuhrbandes 9 vollständig in den Zwischenraum 7 transportiert.

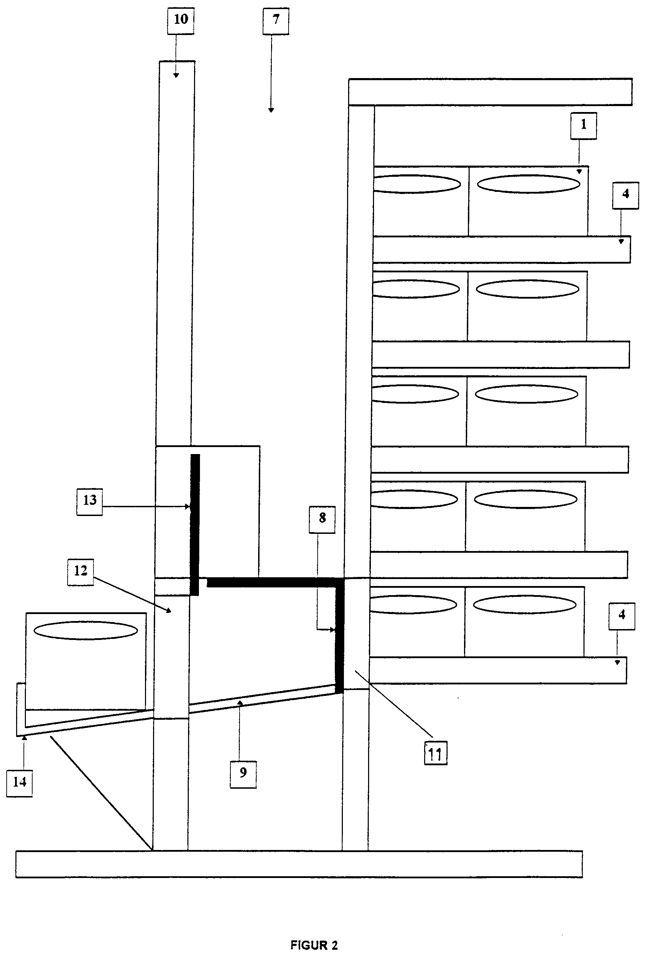

Nachdem sich der Getränkekasten 1 vollständig im Zwischenraum 7 befindet, wird mittels des ersten Schiebers 8 die erste Öffnung 11 wieder verschlossen, wie dies in Figur 1 dargestellt ist. Danach wird mittels des zweiten Schiebers 13 die zweite Öffnung 12 geöffnet und der Getränkekasten 1 mittels des Ausfuhrbandes 9 auf das Entnahmeelement 14 transportiert. Dies ist in Figur 2 dargestellt.

Nachdem sich der Getränkekasten 1 vollständig auf dem Entnahmeelement 14 befindet, wird mittels des zweiten Schiebers 13 die zweite Öffnung 12 wieder verschlossen. Danach kann ein weiterer Entnahmevorgang eingeleitet werden.

Nachdem das unterste Transportband 4 vollständig entleert wurde, werden mittels des zweiten Antriebs 6 die Transportbänder 4 soweit abgesenkt, daß sich das nächste befüllte Transportband 4 in Höhe der ersten Öffnung 11 befindet. In dieser Stellung ist dann dieses Transportband 4 mittels seiner Antriebswelle 3 mit dem ersten Antrieb 5 in Eingriff gebracht. Somit kann der zuvor beschriebene Entnahmevorgang erneut erfolgen.

Ist auch dieses Transportband 4 vollständig geleert, werden die Transportbänder 4 erneut abgesenkt, bis sich das nächste gefüllte Transportband 4 in Höhe der ersten Öffnung 11 befindet.

Auch dieser Vorgang wiederholt sich solange, bis sich das oberste Transportband 4 in Höhe der ersten Öffnung 11 befindet. Da die Transportbänder 4 mittels Ketten miteinander verbunden sind, sind sie ohne Zwischenraum unterhalb der ersten Öffnung 11 aufeinandergestapelt, wie dies insbesondere der Figur 6 entnommen werden kann.

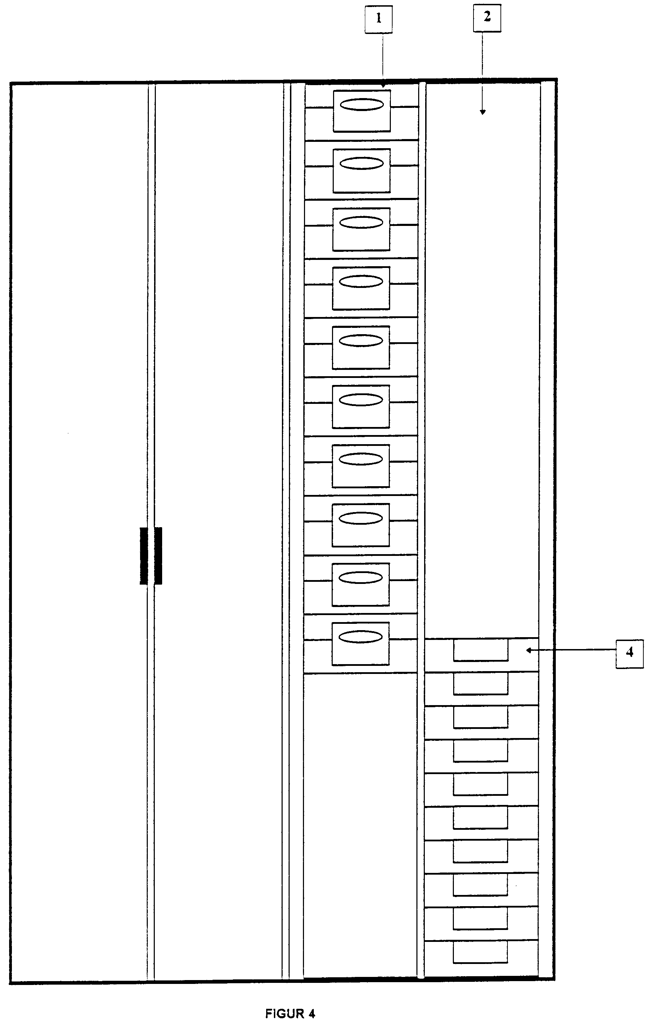

In Figur 4 sind vier erfindungsgemäße Getränkeautomaten nebeneinander angeordnet, wobei von den beiden rechten Getränkeautomaten die Rückwände entfernt wurden. Bei der in Figur 4 dargestellten Anordnung ist der rechte Getränkeautomat vollständig entleert, das heißt, die Transportbänder 4 sind ohne Zwischenraum aufeinandergestapelt. Der daneben stehende erfindungsgemäße Getränkeautomat hingegen ist vollständig gefüllt, wodurch sich das unterste Transportband 4 in Höhe der ersten Öffnung 11 befindet und das oberste Transportband 4 geringfügig unterhalb des zweiten Antriebs 6 angeordnet ist.

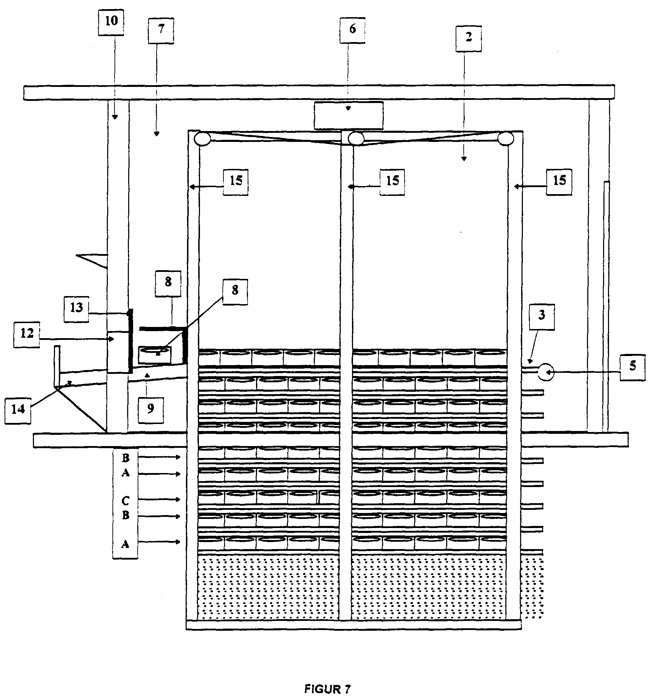

Der in Figur 7 dargestellte erfindungsgemäße Getränkeautomat ist mit drei unterschiedlichen Getränkesorten bestückt. Bei dieser Ausführungsform ist eine Steuerung vorgesehen, welche in Abhängigkeit des gewünschten Getränks das mit dem gewünschten Getränk befüllte Transportband in Höhe der ersten Öffnung 11 positioniert. Die Getränke sind so im Getränkeautomaten angeordnet, daß auf dem untersten Transportband vier Kästen mit dem ersten Getränk angeordnet sind, auf dem unmittelbar darüber liegenden Transportband 4 Kästen mit dem zweiten Getränk und auf dem unmittelbar darüber liegenden Transportband 4 Getränke mit dem dritten Getränk angeordnet sind. Darüber folgen wieder Kästen mit dem ersten Getränk und so weiter.

Damit die Möglichkeit besteht, dem erfindungsgemäßen Getränkeautomaten Kästen mit dem dritten Getränk zu entnehmen, obwohl die darunter liegenden Transportbänder mit dem ersten und zweiten Getränk noch nicht vollständig entleert sind, muß der Raum unterhalb der ersten Öffnung 11 vergrößert werden. Denn durch die nicht entleerten Transportbänder für das erste und zweite Getränk können diese Transportbänder nicht unmittelbar aufeinandergestapelt werden. Der Getränkeautomat ist daher zweckmäßigerweise etwas in die Erde eingelassen, damit das Entnahmeelement 14 in für einen Benutzer des Getränkeautomaten angenehmer Höhe über dem Erdboden angeordnet ist.

## Patentansprüche

1. Getränkeautomat zur Bereitstellung und Ausgabe von in Behältern verpackten Getränken (1), mit einem Speicherraum (2) und einem Entnahmefach (11, 12),
dadurch gekennzeichnet
daß die Getränke in Getränkekästen (1) enthalten sind, wobei die Getränkekästen (1) nebeneinander oder hintereinander auf waagerecht verlaufenden Transportelementen (4) angeordnet sind und mindestens zwei Transportelemente (4) übereinander angeordnet sind, und erste Mittel (5) zur Durchführung einer waagerechten Bewegung der Getränkekästen (1) sowie zweite Mittel (6) zur Durchführung einer senkrechten Bewegung der Transportelemente (4) vorhanden sind.

2. Getränkeautomat nach Anspruch 1,
dadurch gekennzeichnet,
daß die Transportelemente (4) Transportbänder sind, welche eine mit einem Antriebsrad versehene Antriebswelle aufweisen.

3. Getränkeautomat nach Anspruch 1 oder 2,
dadurch gekennzeichnet,
daß die Transportelemente (4) in senkrecht angeordneten Gleitschienen geführt und mittels variabler Elemente miteinander verbunden sind.

4. Getränkeautomat nach einem der Ansprüche 1 bis 3,
dadurch gekennzeichnet,
daß die zweiten Mittel (6) mit dem obersten Transportelement (4) verbunden sind.

5. Getränkeautomat nach einem der Ansprüche 2 bis 4,
dadurch gekennzeichnet,
daß die ersten Mittel (5) jeweils mit dem Antriebsrad des sich in Höhe des Ausgabefachs (11, 12) befindlichen Transportbandes (4) verbunden sind.

6. Getränkeautomat nach einem der Ansprüche 1 bis 5,
dadurch gekennzeichnet,
daß die Transportelemente (4) Führungsschienen aufweisen, mittels welcher die Getränkekästen (1) seitlich führbar sind.

7. Getränkeautomat nach einem der Ansprüche 1 bis 6,
dadurch gekennzeichnet,
daß das Ausgabefach (11, 12) als Schleuse ausgebildet ist.
